# FASCICULE DE BREVET EUROPEEN

(11) **EP 1 361 127 B1**
(45) Date de publication et mention de la délivrance du brevet: **15.12.2004**
(21) Numéro de dépôt: 03009589.7
(22) Date de dépôt: 29.04.2003
(51) Int. Cl.: B60T 13/57

(54) **Servomoteur pneumatique comportant des clapets tubulaires d'admission et de rééquilibrage**
Pneumatischer Bremskarftverstärker mit rohrformigen Einlass- und Ausgleichsventilen
Pneumatic brake booster with tubular intake and balancing valves

(30) Priorité: 07.05.2002 FR 0205770
(43) Date de publication de la demande: 12.11.2003
(73) Titulaire: ROBERT BOSCH GmbH, 70442 Stuttgart (DE)
(72) Inventeur: Maligne, Jean-Charles, 93300 Aubervilliers (FR); Richard, Philippe, 77500 Chelles (FR); Lacroix, Stéphane, 77220 Tournan en Brie (FR); Verbo, Ulysse, 93600 Aulnay-Sous-Bois (FR)
(74) Mandataire: Hurwic, Aleksander Wiktor

(56) Documents cités:
- FR-A- 2 706 543
- US-A- 5 799 559

## Description

L'invention concerne un servomoteur pneumatique d'assistance au freinage pour un véhicule automobile.

L'invention concerne plus particulièrement un servomoteur pneumatique d'assistance au freinage pour un véhicule automobile, du type qui comporte une enveloppe rigide à l'intérieur de laquelle est mobile une cloison transversale délimitant de façon étanche une chambre avant, soumise à une première pression, et une chambre arrière soumise à une deuxième pression variant entre la première pression et une pression supérieure à la première pression, qui est susceptible de solliciter une tige d'actionnement d'un maître cylindre associé au servomoteur par l'intermédiaire d'un disque de réaction, et qui est rappelée élastiquement vers sa position de repos par des premiers moyens de rappel, du type qui comporte une tige de commande se déplaçant dans l'enveloppe sélectivement en fonction d'un effort axial d'entrée exercé vers l'avant à l'encontre d'un effort de rappel exercé sur la tige par des deuxièmes moyens de rappel, du type dans lequel les mouvements de la tige de commande sont susceptibles de déterminer les ouvertures et fermetures d'au moins un clapet axial dit "d'admission" qui est interposé entre une source de pression soumise à la pression supérieure à la première pression et la chambre arrière, et d'au moins un clapet axial dit "de rééquilibrage" qui est interposé entre la chambre avant et la chambre arrière, pour actionner la cloison mobile, et du type dans lequel un plongeur, traversant la cloison mobile et solidaire de l'extrémité de la tige de commande, est susceptible de solliciter directement la tige d'actionnement du maître-cylindre par l'intermédiaire du disque de réaction.

On connaît de nombreux exemples de servomoteurs conventionnels de ce type. Le document FR 2 706 543 A divulge le préambule de la revendication 1.

Dans un tel servomoteur, le piston est solidaire de la paroi mobile. Il est par exemple emboîté au travers de la cloison mobile. Par ailleurs, le clapet de rééquilibrage et le clapet d'admission font partie d'un clapet unique à trois voies dont un siège commun est constitué d'une face avant d'épaulement d'un élément mobile qui est rappelé élastiquement contre une collerette du plongeur et contre une collerette du piston desquelles il est susceptible d'être sélectivement disjoint pour ouvrir le clapet de rééquilibrage ou le clapet d'admission.

Ainsi, un conduit sensiblement radial qui traverse le piston et qui débouche dans la chambre avant, d'une part, et un conduit sensiblement axial qui débouche à l'extérieur du servomoteur, d'autre part, sont susceptibles d'être mis sélectivement en communication par l'intermédiaire d'un clapet associé avec un conduit radial qui traverse le piston et qui débouche dans la chambre arrière pour maintenir ou annuler une différence de pression entre les chambres arrière et provoquer les déplacements de la cloison mobile.

Une telle conception présente l'inconvénient de nécessiter des conduits réalisés dans le piston suivant des formes complexes, qui perturbent l'écoulement de l'air. De ce fait, un servomoteur présente généralement des temps de réponse relativement élevés, et se révèle bruyant.

Par ailleurs, une telle conception est particulièrement onéreuse à mettre en oeuvre, car elle nécessite d'utiliser un piston dont les formes intérieures, destinées à former les conduits, ne peuvent être réalisées que par un procédé d'usinage.

L'invention propose une conception permettant de remédier à ces inconvénients. A cet effet, une telle conception propose un servomoteur, dépourvu de piston, qui comporte des conduits axiaux faisant partie de différents éléments tubulaires internes au servomoteur. Cette conception permet de favoriser l'écoulement de l'air au travers de clapets, ce qui permet de réduire les temps de réponse du servomoteur tout en lui garantissant un fonctionnement silencieux. De surcroît, cette nouvelle conception permet de réaliser la plupart des éléments du servomoteur à l'aide d'un procédé d'emboutissage, moins onéreux que les procédés d'usinage conventionnels.

Dans ce but, l'invention propose un servomoteur du type décrit précédemment, caractérisé en ce que ledit servomoteur comporte :
- un élément tubulaire flottant monobloc, interposé sensiblement radialement entre le plongeur et l'enveloppe, qui est mobile axialement et qui est rappelé élastiquement vers la cloison mobile par l'intermédiaire de troisièmes moyens de rappel, dont des faces transversales décalées axialement comportent des premiers éléments d'étanchéité des clapets axiaux d'admission et de rééquilibrage,
- un second élément transversal complémentaire d'étanchéité du clapet axial d'admission, porté par l'extrémité arrière du plongeur,
- un second élément transversal complémentaire d'étanchéité du clapet axial de rééquilibrage, agencé sur au moins une portion de la face arrière de la cloison mobile,
et en ce que l'extrémité arrière du plongeur comporte une coupelle arrière qui comporte le second élément transversal complémentaire d'étanchéité du clapet axial d'admission et en ce que ladite extrémité arrière du plongeur est traversée par une goupille avant indépendante qui reçoit en appui les extrémités de deux ressorts concentriques dont un premier, dont l'autre extrémité est en appui sur la cloison mobile, forme les deuxièmes moyens de rappel associés à la tige de commande, et dont le second, dont l'autre extrémité est en appui sur une face d'épaulement de l'élément tubulaire, forme les troisièmes moyens de rappel associés au dit élément tubulaire et permet de le solliciter pour fermer le clapet de rééquilibrage,

Selon d'autres caractéristiques de l'invention :
- l'élément tubulaire flottant comporte:
   - un tronçon tubulaire avant, qui est monté de manière étanche autour d'une portée tubulaire de la cloison mobile recevant en coulissement le plongeur, dont l'extrémité avant, portant le premier élément d'étanchéité du clapet de rééquilibrage en regard du second élément d'étanchéité du clapet de rééquilibrage porté par la cloison mobile, est agencée radialement à l'extérieur d'au moins un perçage de communication traversant la cloison, et dont une partie arrière communique avec la chambre arrière,
   - un tronçon tubulaire arrière, d'un diamètre inférieur au diamètre du tronçon avant, qui est guidé en coulissement de manière étanche dans un tronçon tubulaire arrière de l'enveloppe, qui forme un conduit d'admission alimenté par la source de pression soumise à la pression supérieure à la première pression, et dont une face transversale avant de jonction avec le tronçon avant porte le premier élément d'étanchéité du clapet d'admission en regard de la coupelle du plongeur,
- le premier élément d'étanchéité du clapet de rééquilibrage est constitué d'un joint qui est porté par une collerette formée à l'extrémité du tronçon avant de l'élément tubulaire flottant,
- le second élément d'étanchéité du clapet de rééquilibrage est constitué d'une portion de la face arrière de la cloison mobile,
- le premier élément d'étanchéité du clapet d'admission est constitué de la face transversale de jonction des tronçons avant et arrière de l'élément tubulaire flottant,
- le second élément d'étanchéité du clapet d'admission est constitué d'un joint qui est porté par une collerette de la coupelle solidaire du plongeur,
- la portée tubulaire de guidage du plongeur portée par la cloison mobile s'étend axialement à partir de la face arrière de la cloison mobile et la cloison mobile comporte une pluralité de perçages répartis angulairement au travers de la cloison transversale autour de la jonction de sa portée tubulaire et de sa face arrière,
- le premier ressort est agencé extérieurement au second ressort,
- la goupille reçoit en appui l'extrémité arrière d'une douille tubulaire de maintien des premier et deuxième ressorts, le premier ressort est interposé entre une face d'épaulement avant de la douille et la cloison mobile, et le second ressort est interposé entre une face avant d'extrémité de la douille tubulaire et une face transversale d'épaulement de l'élément tubulaire, notamment une face arrière de la collerette d'extrémité avant du tronçon avant,
- le tronçon arrière de l'élément tubulaire est monté de manière étanche dans le tronçon arrière de l'enveloppe par l'intermédiaire d'un joint à lèvre,
- la portée tubulaire de la cloison mobile qui reçoit le plongeur est venue de matière avec ladite cloison mobile et elle comporte un alésage dans lequel est reçu le plongeur et qui débouche en regard du disque de réaction,
- la cloison mobile, l'élément tubulaire flottant, la coupelle solidaire du plongeur sont réalisés par des procédés de découpe et d'emboutissage.

D'autres caractéristiques et avantages de l'invention apparaîtront à la lecture de la description détaillée qui suit pour la compréhension de laquelle on se reportera aux dessins annexés dans lesquels :
- la figure 1 est une vue en coupe axiale d'ensemble d'un servofrein comportant un servomoteur pneumatique d'assistance au freinage réalisé conformément à un état antérieur de la technique ;
- la figure 2 est une vue de détail du servomoteur de la figure 1 ;
- la figure 3 est une vue en perspective des éléments internes à l'enveloppe d'un servomoteur selon l'invention,
- la figure 4 est une vue de détail en coupe axiale d'un servomoteur réalisé conformément à l'invention, le plongeur étant en repos, le clapet de rééquilibrage étant ouvert et le clapet d'admission étant fermé,
- la figure 5 est une vue de détail en coupe axiale d'un servomoteur réalisé conformément à l'invention, le plongeur étant actionné et le clapet de rééquilibrage et le clapet d'admission étant fermés,
- la figure 6 est une vue de détail en coupe axiale d'un servomoteur réalisé conformément à l'invention, le plongeur étant actionné, le clapet de rééquilibrage étant fermé et le clapet d'admission étant ouvert,
- la figure 7 est une vue de détail en coupe axiale d'un servomoteur réalisé conformément à l'invention, le plongeur étant relâché, le clapet de rééquilibrage étant ré-ouvert et le clapet d'admission étant refermé,

Dans la description qui va suivre, des chiffres de référence identiques désignent des pièces identiques ou ayant des fonctions similaires.

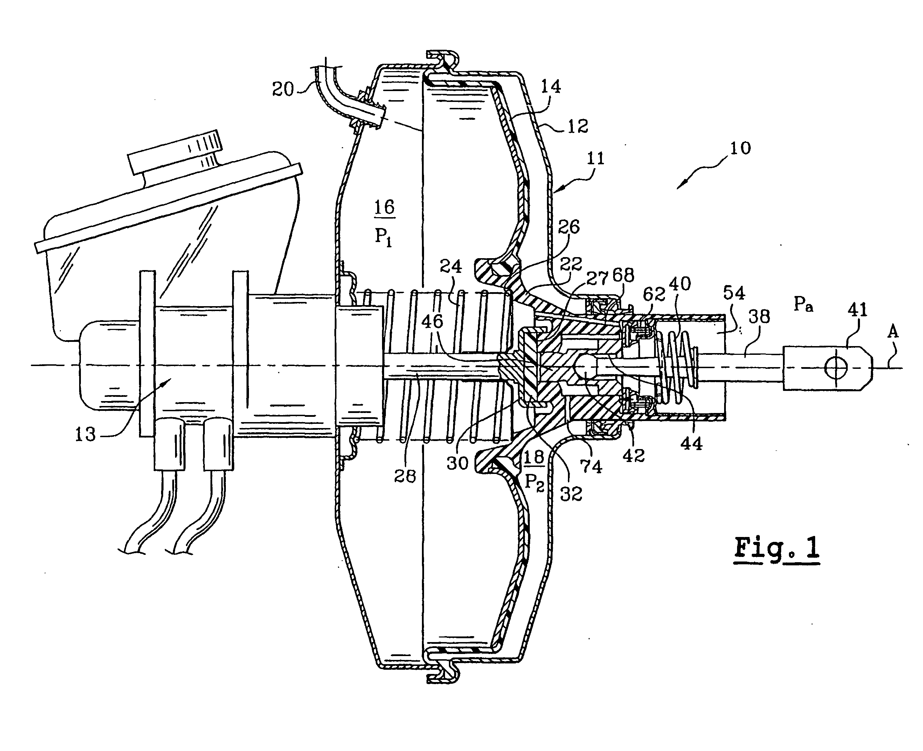

Par convention, les termes "avant", "arrière", supérieur", "inférieur" désignent respectivement des éléments ou des positions orientés respectivement vers la gauche, la droite, le haut, ou le bas des figures 1 à 7.

On a représenté à la figure 1 l'ensemble d'un servofrein 10 comportant un servomoteur 11 pneumatique conventionnel d'assistance au freinage pour un véhicule automobile. Le servomoteur 11 est destiné à actionner un maître-cylindre 13 de freinage du véhicule.

De manière connue, le servomoteur pneumatique 11 comporte une enveloppe rigide 12 à l'intérieur de laquelle est montée mobile une cloison 14 transversale qui délimite de façon étanche une chambre avant 16, soumise à une première pression "P₁", et une chambre arrière 18 soumise à une deuxième pression "P₂". La deuxième pression "P₂" est susceptible de varier entre la valeur de la pression "P₁" et la valeur d'une pression "Pₐ" supérieure à la pression "P₁" pour provoquer les déplacements de la cloison 14, qui est susceptible de solliciter, comme on le verra ultérieurement une tige 28 d'actionnement du maître-cylindre 13.

Plus particulièrement, la pression "P₁" correspond notamment à une pression fournie par une source de dépression du véhicule. Dans le cas d'un moteur à allumage commandé, la pression de dépression "P₁" est par exemple fournie par un collecteur d'admission du moteur du véhicule et, dans le cas d'un moteur à allumage par compression de type "diesel", la pression de dépression "P₁" est par exemple fournie par une pompe à vide du véhicule.

La chambre avant 16 est reliée à la source de dépression du véhicule par l'intermédiaire d'un conduit 20 de dépression qui débouche dans l'enveloppe 12.

Le servomoteur pneumatique 11 comporte un piston mobile 22 d'axe A qui est solidaire de la cloison mobile 14. Par exemple, le piston mobile 22 est emboîté au travers de la cloison mobile 14.

A l'intérieur de l'enveloppe 12, la cloison mobile 14 est rappelée élastiquement vers l'arrière par des premiers moyens de rappel constitués d'un ressort 24 de rappel qui prend appui sur l'enveloppe 12 et sur une face avant 26 du piston mobile 22. La face avant 26 du piston mobile 22 comporte une portée cylindrique avant 27, qui est agencée en regard d'un disque 32 de réaction qui est logé dans une coupelle 30 solidaire de la tige 28 d'actionnement du maître-cylindre 13.

Une tige 38 de commande, qui est par exemple reliée à une pédale de frein du véhicule par l'intermédiaire d'un manchon 41 d'accouplement, est susceptible de se déplacer dans l'enveloppe 12, et plus particulièrement dans le piston mobile 22, sélectivement en fonction d'un effort axial d'entrée exercé vers l'avant sur le manchon 41. L'effort d'actionnement est exercé à l'encontre d'un effort de rappel produit sur la tige 38 par des deuxièmes moyens de rappel, notamment un ressort de rappel 40 qui est interposé entre le piston mobile 22 et la tige 38 de commande.

L'extrémité avant de la tige 38 de commande qui est opposée au manchon 41 est conformée en rotule 42 et elle est reçue dans un logement 44 complémentaire d'un plongeur 46 sensiblement cylindrique qui est monté coulissant dans le piston mobile 22.

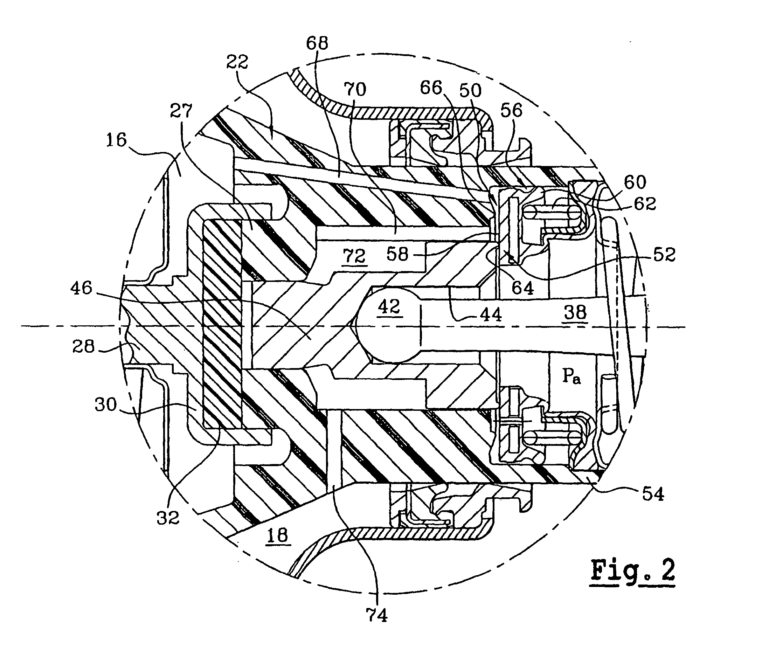

Comme l'illustre plus particulièrement la figure 2, les mouvements de la tige 38 de commande sont susceptibles de déterminer les ouvertures et fermetures d'au moins un clapet 52 axial dit "d'admission" qui est interposé entre une source de pression soumise à la pression "Pₐ" supérieure à la première pression "P₁" et la chambre 18 arrière, et d'au moins un clapet 50 axial dit "de rééquilibrage" qui est interposé entre la chambre 16 avant et la chambre 18 arrière, pour actionner la cloison mobile précédemment décrite.

De manière connue, et de manière non limitative de l'invention, la source de pression soumise à la pression "Pₐ" correspond au milieu atmosphérique ambiant. A cet effet, le clapet 52 débouche directement dans une extrémité arrière 54 du corps du piston 22 formant un conduit axial qui est ouvert à l'air libre.

De manière conventionnelle, le clapet 50 de rééquilibrage et le clapet 52 d'admission font partie d'un clapet 56 unique à trois voies dont un siège commun 58 est constitué d'une face avant d'épaulement d'un élément 60 annulaire mobile qui est rappelé élastiquement par un ressort 62 contre une collerette 64 du plongeur 46 et contre une collerette 66 du piston 22.

Ainsi; un conduit 68 sensiblement radial qui traverse le piston 22 et qui débouche dans la chambre avant 16, ou bien le conduit 54 sensiblement axial qui débouche à l'extérieur du servomoteur 11, sont susceptibles d'être mis sélectivement en communication, par l'intermédiaire d'un alésage 72 de guidage du plongeur et d'une rainure 70 formée dans cet alésage, avec un conduit radial 74 qui traverse le piston 22 et qui débouche dans la chambre arrière 18 pour maintenir ou annuler une différence de pression entre les chambres avant 16 et arrière 18 et provoquer ainsi les déplacements de la cloison mobile 14.

Les clapets 52 d'admission et 50 de rééquilibrage sont rappelés élastiquement vers une position de fermeture du clapet 52 d'admission et d'ouverture du clapet 50 de rééquilibrage par les deuxièmes moyens de rappel constitués du ressort 40 de la tige 38 de commande.

Une telle conception est particulièrement onéreuse à mettre en oeuvre, car elle nécessite d'utiliser un piston dont les formes intérieures, destinées à former les conduits 68 et 74, doivent être réalisées par un procédé d'usinage, ou par un procédé de moulage dans lequel les conduits sont obtenus au moyen de tiroirs radiaux.

Pour remédier à cet inconvénient, l'invention propose un servomoteur 11 du type décrit précédemment dans lequel les conduits d'admission et de rééquilibrage sont formés dans des éléments tubulaires du servomoteur 11.

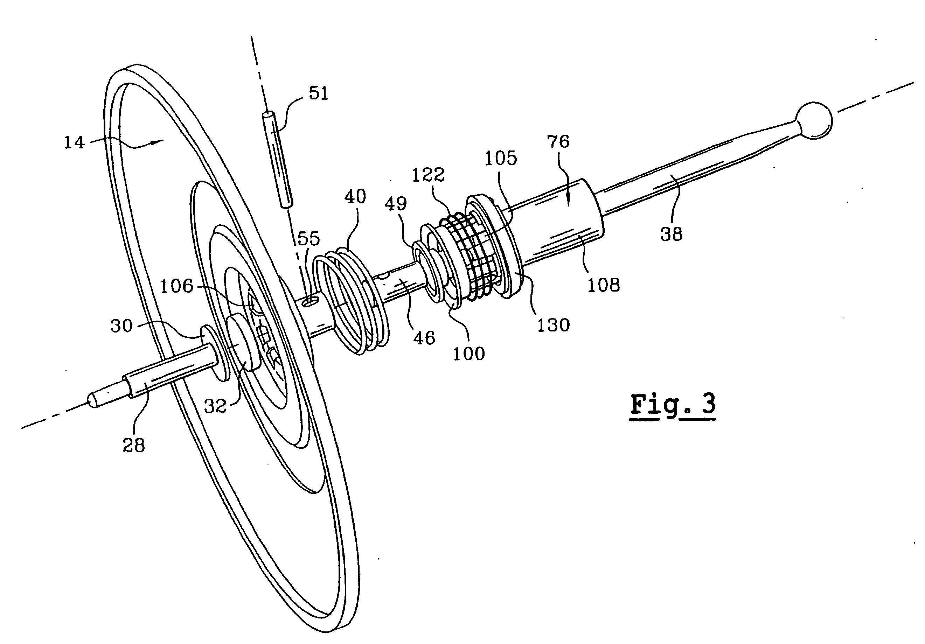

A cet effet, comme l'illustrent les figures 3 à 7, le servomoteur 12 est dépourvu de piston et il comporte :
- un élément 76 tubulaire flottant monobloc, interposé sensiblement radialement entre le plongeur 46 et l'enveloppe 12 , qui est mobile axialement et qui est rappelé élastiquement vers la cloison mobile 14 par l'intermédiaire de troisièmes moyens de rappel, dont des faces 78, 80 transversales décalées axialement comportent des premiers éléments 82, 84 d'étanchéité des clapets axiaux d'admission et de rééquilibrage 52, 50,
- un second élément 86 transversal complémentaire d'étanchéité du clapet 52 axial d'admission, porté par l'extrémité arrière 45 du plongeur 46,
- un second élément 88 transversal complémentaire d'étanchéité du clapet 50 axial de rééquilibrage, agencé sur au moins une portion de la face arrière 90 de la cloison 14 mobile.

Par ailleurs, l'extrémité 45 arrière du plongeur 46 comporte une coupelle arrière 49 qui comporte le second élément 86 transversal complémentaire d'étanchéité du clapet 52 axial d'admission et est traversé par une goupille avant 51 indépendante qui reçoit en appui les extrémités 41, 123 de deux ressorts concentriques 40, 122 dont un premier ressort 40, de raideur élevée et dont l'autre extrémité 39 est en en appui sur la cloison mobile 14, forme les seconds moyens de rappel associés à la tige 38 de commande, et dont le second ressort 122, de raideur réduite et dont l'autre extrémité 121 est en en appui sur une face d'épaulement de l'élément 76 tubulaire, forme les troisièmes moyens de rappel associés à l'élément 76 tubulaire et permet de le solliciter pour fermer le clapet 50 de rééquilibrage.

Conformément à l'invention, l'élément tubulaire 76 flottant comporte un tronçon 100 tubulaire avant, qui est monté de manière étanche autour d'une portée 98 tubulaire de la cloison 14 mobile recevant en coulissement le plongeur 46. L'extrémité avant 102 du tronçon avant 100 comporte la face avant 80 transversale portant le premier élément 84 d'étanchéité du clapet 50 de rééquilibrage en regard le second élément 88 d'étanchéité du clapet de rééquilibrage 50 portés par la face arrière 90 de la cloison mobile 14. L'extrémité 102 du tronçon avant 100 est agencée radialement à l'extérieur d'au moins un perçage 106 de communication traversant la cloison 14, et une partie arrière du tronçon 100 tubulaire avant, agencée en arrière des moyens d'étanchéité qui permettent son coulissement étanche autour de la portée tubulaire 98, communique avec la chambre arrière 18 par l'intermédiaire de lumières longitudinales 105.

Conformément à l'invention, l'élément tubulaire 76 flottant comporte aussi un tronçon 108 tubulaire arrière, d'un diamètre inférieur au diamètre du tronçon 100 avant, qui est guidé en coulissement de manière étanche dans un tronçon tubulaire 109 arrière de l'enveloppe 12.

En particulier, le tronçon 108 tubulaire arrière est monté coulissant au travers d'un joint à lèvre 113 porté par le tronçon tubulaire 109 arrière de l'enveloppe 12.

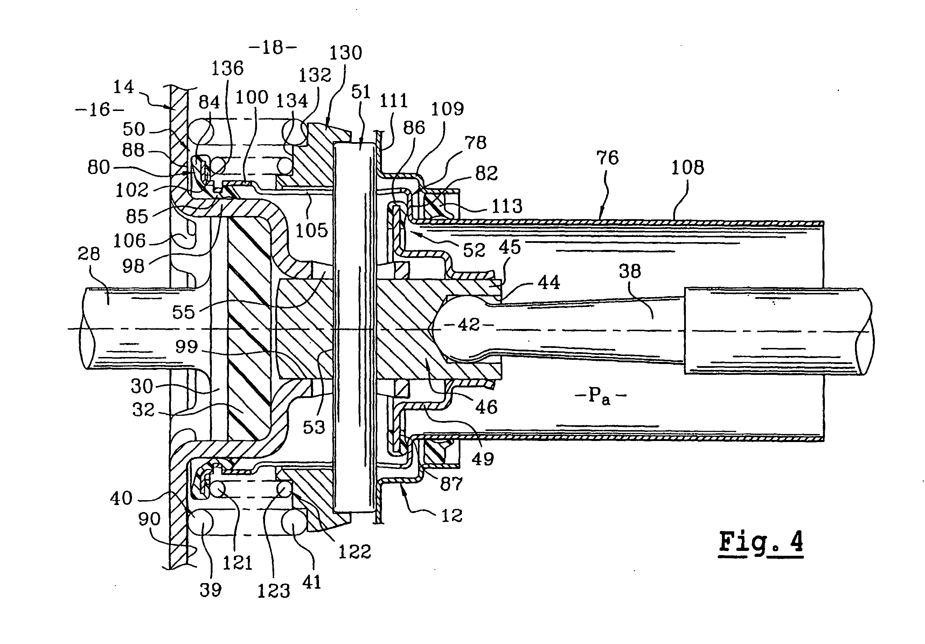

Avantageusement, le tronçon tubulaire 109 arrière de l'enveloppe 12 comporte au moins une face annulaire d'épaulement 111 qui est destiné à recevoir les extrémités de la goupille 51 en butée pour maintenir le plongeur 46 et la tige 38 de commande dans leurs positions de repos, comme représenté plus particulièrement à la figure 4.

La goupille 51 est reçue dans un perçage 53 qui traverse diamétralement le plongeur 46. Elle traverse par ailleurs des lumières diamétralement opposées 55 de la portée tubulaire 98 qui reçoit en coulissement le plongeur 46, et les lumières longitudinales 105 de l'élément tubulaire 76.

Le tronçon 108 tubulaire arrière forme un conduit d'admission alimenté par la source de pression soumise à la pression "Pₐ" supérieure à la première pression "P₁".

Une face 78 transversale avant de jonction du tronçon arrière 108 et du tronçon 100 avant porte le premier élément d'étanchéité 82 du clapet 52 d'admission en regard de la coupelle 49 du plongeur.

Plus particulièrement, le premier élément 82 d'étanchéité du clapet 52 d'admission est simplement constitué de la face 78 transversale de jonction des tronçons avant 100 et arrière 108 de l'élément 76 tubulaire flottant, et le second élément d'étanchéité 86 du clapet d'admission 52 est constitué d'un joint qui est porté par une collerette 87 de la coupelle 49 solidaire du plongeur 46. De préférence, le joint 86 est monté à cheval sur la collerette 87 du plongeur 49.

Par ailleurs, le premier élément 84 d'étanchéité du clapet 50 de rééquilibrage est constitué d'un joint qui est porté par une collerette formée à l'extrémité 102 du tronçon avant 100 de l'élément 76 tubulaire flottant, et le second élément 88 d'étanchéité du clapet 50 de rééquilibrage est constitué d'une portion de la face arrière 90 de la cloison mobile 14. De préférence, le joint 84 est monté à cheval sur la collerette formant l'extrémité 102 du tronçon avant 100 de l'élément tubulaire 76.

Ces dispositions ne sont pas limitatives de l'invention, et les joints pourraient être portés respectivement par la face 78 transversale de jonction des tronçons avant 100 et arrière 108 et par la face arrière 90 de la cloison mobile 14.

La portée 98 tubulaire de guidage du plongeur 46 est portée par la cloison mobile 14 avec laquelle elle est de préférence venue de matière et elle s'étend axialement à partir de la face 90 arrière de la cloison 14 mobile. Elle comporte un alésage 99 dans lequel est monté coulissant le plongeur 46 et qui débouche en regard du disque de réaction 32 pour permettre au plongeur 46 de solliciter ledit disque de réaction 32.

Dans cette configuration, le tronçon avant 100 coulisse de manière étanche sur ladite portée tubulaire 98 par l'intermédiaire d'une lèvre 85 du joint 84. Pour permettre au clapet 50 de rééquilibrage d'interrompre ou d'autoriser la communication entre la chambre avant 16 et la chambre arrière 18, la cloison 14 mobile comporte une pluralité de perçages 106 répartis angulairement au travers de la cloison 14 transversale autour de la jonction de sa portée 98 tubulaire et de sa face 90 arrière.

Dans le mode de réalisation préféré de l'invention, le premier ressort 40, de charge la plus élevée, est agencé extérieurement au second ressort 122, de charge la plus réduite.

Pour permettre ce montage, les extrémités libres de la goupille 51 reçoit en appui l'extrémité arrière d'une douille 130 tubulaire de maintien des premier et deuxième ressorts 40, 122. Le premier ressort 40 est interposé entre une face d'épaulement avant 132 de la douille 130 et la cloison mobile 14, et le second ressort 122 est interposé entre une face avant 134 d'extrémité de la douille 130 tubulaire et une face transversale d'épaulement de l'élément tubulaire, notamment une face arrière 136 de la collerette 102 d'extrémité avant du tronçon 100 avant .

Un avantage particulier de l'invention est que la cloison 14 mobile, l'élément 76 tubulaire flottant, la coupelle 49 solidaire du plongeur 46 sont réalisés de préférence par des procédés de découpe et d'emboutissage. Cette configuration est particulièrement avantageuse car elle permet de réaliser le servomoteur 11 plus rapidement.

Par ailleurs, la cloison mobile 14 et l'élément 76 tubulaire présentant des formes tubulaires simples, cette conception permet de favoriser l'écoulement de l'air au travers de clapets 50 et 52, ce qui permet de réduire les temps de réponse du servomoteur 11 tout en lui garantissant un fonctionnement silencieux.

Dans cette configuration, les éléments internes du servomoteur 11 sont susceptibles d'occuper quatre configurations différentes qui ont été représentées aux figures 4 à 7.

Comme l'illustre la figure 4, la tige de commande 38 est susceptible d'occuper une position de repos. Dans cette position, le clapet 52 d'admission d'air est fermé et le clapet 50 de rééquilibrage est ouvert, de sorte que les chambres avant 16 et arrière 18 sont soumises à la même pression "P₁" de dépression. La cloison 14 est donc immobile. La tige de commande 38 et le plongeur 46 sont maintenus dans leur position de repos par la goupille 51 qui est en appui sur la face annulaire transversale 111 de l'enveloppe 12.

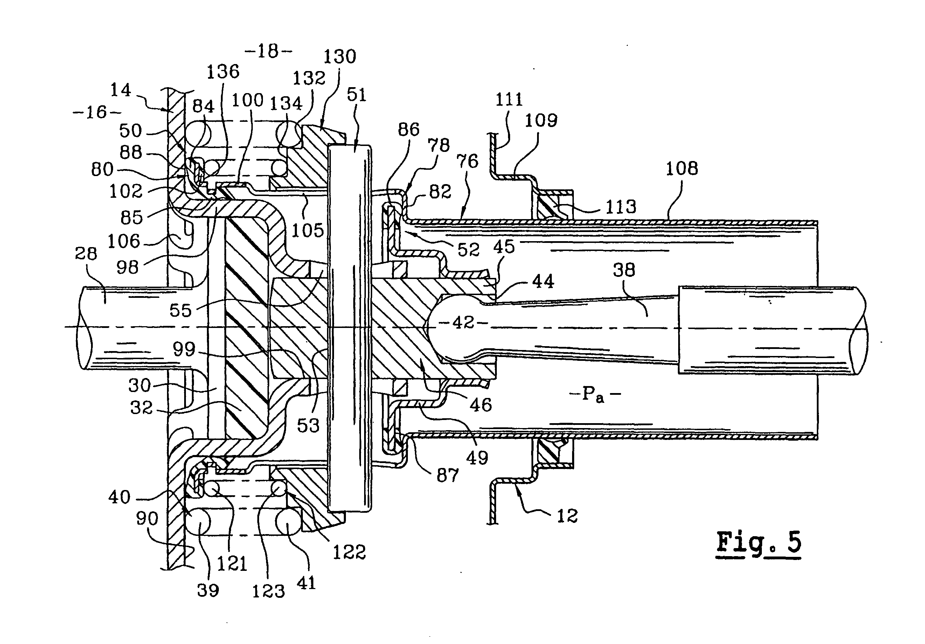

A partir de cette position, une avancée de la tige de commande 38 provoque l'avancée du plongeur 46 et de la goupille 51 qui y est liée, comme représenté à la figure 5. La goupille 51 repousse la douille 130 tubulaire de maintien des premier et deuxième ressorts 40, 122. Le premier ressort 40 se comprime tandis que la douille 130 tubulaire entraîne l'élément 76 tubulaire par l'intermédiaire du ressort 122 jusqu'à ce que le joint 84 vienne en contact avec la partie de la face arrière 90 de la cloison 14, ce qui provoque la fermeture du clapet de rééquilibrage 50, comme représenté à la figure 5.

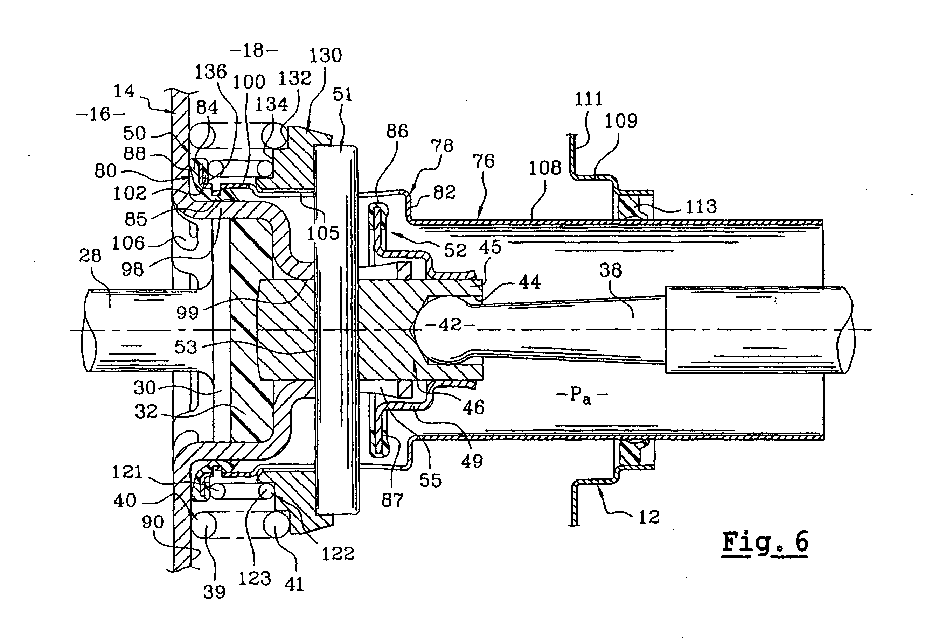

En poursuivant son avancée, la tige de commande comprime alors le ressort 122 par l'intermédiaire de la douille tubulaire 130, ce qui amène la coupelle 49 et le joint 86 associé à se décoller de la face 78 transversale de jonction des tronçons avant 100 et arrière 108 de l'élément 76 formant le premier élément 82 d'étanchéité du clapet 52 d'admission, comme représenté à la figure 6. L'air à la pression atmosphérique pénètre dans la chambre arrière 18 et repousse la cloison mobile 14.

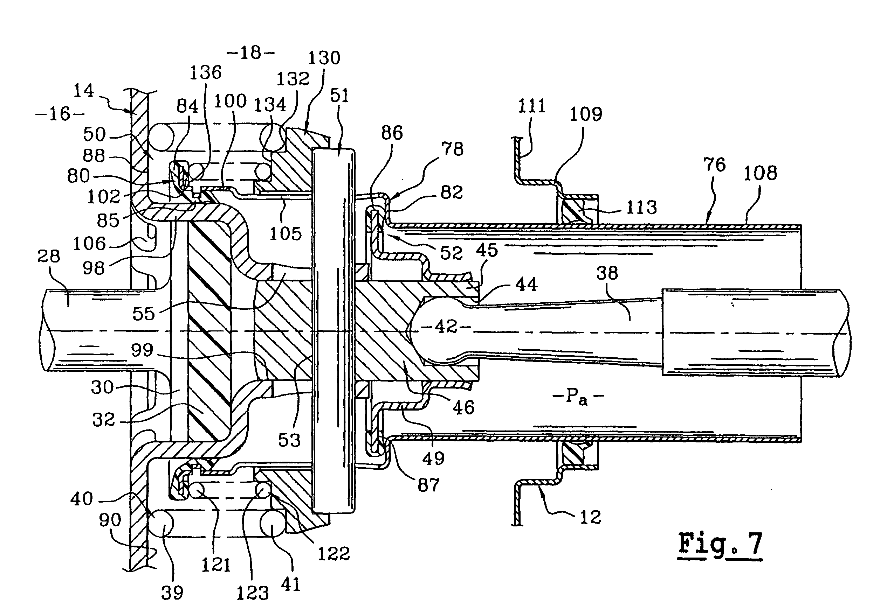

Si la tige de commande 38 est relâchée, comme représenté à la figure 7, la décompression du premier ressort 40 provoque le rappel de ladite tige 38 de commande vers sa position de repos. Lors de son retour, le plongeur 46 conduit la coupelle 49 à revenir en contact avec face 78 transversale de jonction des tronçons avant 100 et arrière 108 de l'élément 76, ce qui referme le clapet 52 d'admission puis provoque le rappel de l'élément tubulaire 76 et par conséquent la réouverture du clapet de rééquilibrage 50. De ce fait, l'air à la pression atmosphérique "Pa" contenu dans la chambre de pression arrière 18 est évacué dans la chambre de pression 14 avant soumise à la pression de dépression "P₁".

L'invention permet donc de bénéficier d'un servomoteur bénéficiant d'un temps de réponse réduit et d'un fonctionnement particulièrement silencieux, qui fait de surcroît largement appel à une conception tubulaire emboutie simplifiant sa fabrication.

## Revendications

1. Servomoteur (11) pneumatique d'assistance au freinage pour un véhicule automobile,
du type qui comporte une enveloppe (12) rigide à l'intérieur de laquelle est mobile une cloison (14) transversale délimitant de façon étanche une chambre avant (16), soumise à une première pression (P₁), et une chambre arrière (18) soumise à une deuxième pression (P₂) variant entre la première pression (P₁) et une pression (Pₐ) supérieure à la première pression (P₁), qui est susceptible de solliciter une tige (28) d'actionnement d'un maître cylindre (13) associé au servomoteur (11) par l'intermédiaire d'un disque (32) de réaction, et qui est rappelée élastiquement vers sa position de repos par des premiers moyens (24) de rappel,
du type qui comporte une tige (38) de commande se déplaçant dans l'enveloppe (12) sélectivement en fonction d'un effort axial d'entrée exercé vers l'avant à l'encontre d'un effort de rappel exercé sur la tige (38) par des deuxièmes moyens de rappel,
du type dans lequel les mouvements de la tige (38) de commande sont susceptibles de déterminer les ouvertures et fermetures d'au moins un clapet (52) axial dit "d'admission" qui est interposé entre une source de pression soumise à la pression (Pₐ) supérieure à la première pression (P₁) et la chambre arrière (18), et d'au moins un clapet axial (50) dit "de rééquilibrage" qui est interposé entre la chambre avant (16) et la chambre arrière (18), pour actionner la cloison (14) mobile,
et du type dans lequel un plongeur (46), traversant la cloison (14) mobile et solidaire de l'extrémité de la tige (38) de commande, est susceptible de solliciter directement la tige (28) d'actionnement du maître-cylindre (13) par l'intermédiaire du disque (32) de réaction,
**caractérisé en ce que** le servomoteur (11) comporte :
- un élément (76) tubulaire flottant monobloc, interposé sensiblement radialement entre le plongeur (46) et l'enveloppe (12) , qui est mobile axialement et qui est rappelé élastiquement vers la cloison mobile (14) par l'intermédiaire de troisièmes moyens de rappel, dont des faces (78,80) transversales décalées axialement comportent des premiers éléments (82, 84) d'étanchéité des clapets axiaux d'admission et de rééquilibrage (50, 52),
- un second élément (86) transversal complémentaire d'étanchéité du clapet (52) axial d'admission, porté par l'extrémité arrière du plongeur (46),
- un second élément (88) transversal complémentaire d'étanchéité du clapet (50) axial de rééquilibrage, agencé sur au moins une portion de la face arrière (90) de la cloison (14) mobile,
et **caractérisé en ce que** l'extrémité arrière (45) du plongeur (46) comporte une coupelle (49) arrière qui comporte le second élément (86) transversal complémentaire d'étanchéité du clapet (52) axial d'admission et **en ce que** ladite extrémité arrière (45) du plongeur (45) est traversée par une goupille (51) avant indépendante qui reçoit en appui les extrémités de deux ressorts (40, 122) concentriques dont un premier (40), dont l'autre extrémité est en appui sur la cloison (14) mobile, forme les deuxièmes moyens de rappel associés à la tige (38) de commande, et dont le second (122), dont l'autre extrémité est en en appui sur une face (136) d'épaulement de l'élément (76) tubulaire, forme les troisièmes moyens de rappel associés au dit élément tubulaire (76) et permet de le solliciter pour fermer le clapet (50) de rééquilibrage.

2. Servomoteur (11) pneumatique selon la revendication précédente, **caractérisé en ce que** l'élément tubulaire (76) flottant comporte:
- un tronçon (100) tubulaire avant, qui est monté de manière étanche autour d'une portée (98) tubulaire de la cloison (14) mobile recevant en coulissement le plongeur (46), dont l'extrémité avant (102), portant le premier élément d'étanchéité (84) du clapet de rééquilibrage en regard du second élément (88) d'étanchéité du clapet (50) de rééquilibrage porté par la cloison mobile (14), est agencée radialement à l'extérieur d'au moins un perçage (106) de communication traversant la cloison (14), et dont une partie arrière communique avec la chambre arrière (18),
- un tronçon (108) tubulaire arrière, d'un diamètre inférieur au diamètre du tronçon (94) avant, qui est guidé en coulissement de manière étanche dans un tronçon tubulaire arrière (109) de l'enveloppe (12), qui forme un conduit d'admission alimenté par la source de pression soumise à la pression (Pₐ) supérieure à la première pression (P₁), et dont une face (78) transversale avant de jonction avec le tronçon avant porte le premier élément (82) d'étanchéité du clapet d'admission (52) en regard de la coupelle (49) du plongeur (46).

3. Servomoteur (11) selon l'une des revendications précédentes, **caractérisé en ce que** :
- le premier élément (84) d'étanchéité du clapet de rééquilibrage (50) est constitué d'un joint qui est porté par une collerette formée à l'extrémité (102) du tronçon avant (100) de l'élément tubulaire (76) flottant,
- le second élément (88) d'étanchéité du clapet de rééquilibrage (50) est constitué d'une portion de la face arrière (90) de la cloison mobile (14),
- le premier élément (82) d'étanchéité du clapet (52) d'admission est constitué de la face (78) transversale de jonction des tronçons avant (100) et arrière (108) de l'élément tubulaire (76) flottant,
- le second élément (86) d'étanchéité du clapet d'admission (52) est constitué d'un joint qui est porté par une collerette (87) de la coupelle (49) solidaire du plongeur (46).

4. Servomoteur (11) pneumatique selon la revendication précédente, **caractérisé en ce que** la portée (98) tubulaire de guidage du plongeur (46) portée par la cloison mobile (14) s'étend axialement à partir de la face (90) arrière de la cloison (14) mobile et **en ce que** la cloison (14) mobile comporte une pluralité de perçages (106) répartis angulairement au travers de la cloison (14) transversale autour de la jonction de sa portée (98) tubulaire et de sa face (90) arrière.

5. Servomoteur (11) selon l'une quelconque des revendications 1 à 4, **caractérisé en ce que** le premier ressort (40) est agencé extérieurement au second ressort (122).

6. Servomoteur (11) selon la revendication précédente prise en combinaison avec la revendication 2, **caractérisé en ce que** la goupille (51) reçoit en appui l'extrémité arrière d'une douille (130) tubulaire de maintien des premier et deuxième ressorts (40, 122), **en ce que** le premier ressort (40) est interposé entre une face d'épaulement (132) avant de la douille (130) et la cloison (14) mobile, et **en ce que** le second ressort (122) est interposé entre une face avant (134) d'extrémité de la douille (130) tubulaire et une face transversale d'épaulement de l'élément tubulaire, notamment une face arrière (136) de la collerette (102) d'extrémité avant du tronçon (100) avant.

7. Servomoteur (11) selon l'une quelconque des revendications 2 à 6, **caractérisé en ce que** le tronçon arrière (108) de l'élément tubulaire (76) est monté de manière étanche dans le tronçon arrière (109) de l'enveloppe (12) par l'intermédiaire d'un joint à lèvre (113).

8. Servomoteur (11) selon l'une quelconque des revendications 2 à 7, **caractérisé en ce que** la portée tubulaire (98) de la cloison mobile (14) qui reçoit le plongeur (46) est venue de matière avec ladite cloison mobile (14) et **en ce qu'**elle comporte un alésage (99) dans lequel est reçu le plongeur (46) et qui débouche en regard du disque (32) de réaction.

9. Servomoteur (11) selon les revendications 2 à 8 prises en combinaison, **caractérisé en ce que** la cloison (14) mobile, l'élément (76) tubulaire flottant, la coupelle (49) solidaire du plongeur (46) sont réalisés par des procédés de découpe et d'emboutissage.

## Patentansprüche

1. Pneumatischer Servomotor (11) zur Bremsunterstützung für ein Kraftfahrzeug,
vom Typ, der ein starres Gehäuse (12) aufweist, in dem eine quer verlaufende Wand (14) beweglich ist, die in dichter Weise eine vordere Kammer (16), die einem ersten Druck (P₁) ausgesetzt ist, und eine hintere Kammer (18) abgrenzt, die einem zweiten Druck (P₂) ausgesetzt ist, welcher zwischen dem ersten Druck (P₁) und einem Druck (Pₐ) variiert, der höher ist als der erste Druck (P₁), die mittels einer Reaktionsscheibe (32) eine Betätigungsstange (28) eines Hauptzylinders (13) beaufschlagen kann, der dem Servomotor (11) zugeordnet ist, und die durch erste Rückstellmittel (24) elastisch in ihre Ruhelage zurückgestellt wird,
vom Typ, der eine Steuerstange (38) aufweist, die sich in dem Gehäuse (12) selektiv in Abhängigkeit von einer axialen Eingangskraft, welche nach vorne ausgeübt wird, entgegen einer durch zweite Rückstellmittel auf die Stange (38) ausgeübten Rückstellkraft verschiebt,
vom Typ, bei dem die Bewegungen der Steuerstange (38) die Öffnungs- und Schließvorgänge mindestens eines axialen Ventils (52), genannt "Einlassventil", das zwischen einer Druckquelle, die dem Druck (Pₐ) ausgesetzt ist, welcher höher ist als der erste Druck (P₁), und der hinteren Kammer (18) zwischengeschaltet ist, und mindestens eines axialen Ventils (50), genannt "Ausgleichsventil", das zwischen der vorderen Kammer (16) und der hinteren Kammer (18) zwischengeschaltet ist, bestimmen können, um die bewegliche Wand (14) zu betätigen,
und vom Typ, bei dem ein Tauchkolben (46), der die bewegliche Wand (14) durchquert und fest mit dem Ende der Steuerstange (38) verbunden ist, die Betätigungsstange (28) des Hauptzylinders (13) mittels der Reaktionsscheibe (32) direkt beaufschlagen kann,
**dadurch gekennzeichnet, dass** der Servomotor (11) folgendes aufweist:
- ein röhrenförmiges, schwimmendes Element (76) aus einem Stück, das im Wesentlichen radial zwischen dem Tauchkolben (46) und dem Gehäuse (12) zwischengeschaltet ist, das axial beweglich ist, durch dritte Rückstellmittel elastisch zur beweglichen Wand (14) zurückgestellt wird und bei dem quer verlaufende, axial versetzte Flächen (78, 80) erste Dichtelemente (82, 84) der axialen Ventile (50, 52) für den Einlass und den Ausgleich aufweisen,
- ein zweites, quer verlaufendes, komplementäres Dichtelement (86) des axialen Einlassventils (52), das von dem hinteren Ende des Tauchkolbens (46) getragen ist,
- ein zweites, quer verlaufendes, komplementäres Dichtelement (88) des axialen Ausgleichsventils (50), das mindestens auf einem Teilstück der hinteren Fläche (90) der beweglichen Wand (14) angeordnet ist,
und **dadurch gekennzeichnet, dass** das hintere Ende (45) des Tauchkolbens (46) eine hintere Schale (49) aufweist, die das zweite, quer verlaufende, komplementäre Dichtelement (86) des axialen Einlassventils (52) aufweist, und dass das hintere Ende (45) des Tauchkolbens (46) von einem vorderen, unabhängigen Stift (51) durchquert ist, an dem die Enden zweier konzentrischer Federn (40, 122) anliegen, wobei eine erste Feder (40), deren anderes Ende an der beweglichen Wand (14) anliegt, die zweiten Rückstellmittel bildet, die der Steuerstange (38) zugeordnet sind, und wobei die zweite Feder (122), deren anderes Ende an einer Absatzfläche (136) des röhrenförmigen Elements (76) anliegt, die dritten Rückstellmittel bildet, die dem röhrenförmigen Element (76) zugeordnet sind, und eine Beaufschlagung dieses Elements zum Schließen des Ausgleichsventils (50) ermöglicht.

2. Pneumatischer Servomotor (11) nach dem vorhergehenden Anspruch, **dadurch gekennzeichnet, dass** das röhrenförmige, schwimmende Element (76) folgendes aufweist:
- einen röhrenförmigen, vorderen Abschnitt (100), der in dichter Weise um einen röhrenförmigen Bereich (98) der beweglichen Wand (14) angebracht ist, welcher den Tauchkolben (46) gleitend aufnimmt, bei dem das vordere Ende (102), welches das erste Dichtelement (84) des Ausgleichsventils gegenüber des zweiten Dichtelements (88) des Ausgleichsventils (50), das von der beweglichen Wand (14) getragenen ist, trägt, radial außerhalb mindestens eines Verbindungslochs (106) angeordnet ist, welches die Wand (14) durchquert, und bei dem ein hinterer Teil mit der hinteren Kammer (18) verbunden ist,
- einen röhrenförmigen, hinteren Abschnitt (108), der einen kleineren Durchmesser als der vordere Abschnitt (94) besitzt, der in dichter Weise gleitend in einem hinteren, röhrenförmigen Abschnitt (109) des Gehäuses (12) geführt ist, der eine Einlassleitung bildet, die von der Druckquelle gespeist ist, welche dem Druck (Pₐ) ausgesetzt ist, der höher ist als der erste Druck (P₁), und bei dem eine quer verlaufende, vordere Anschlussfläche (78) an den vorderen Abschnitt das erste Dichtelement (82) des Einlassventils (52) gegenüber der Schale (49) des Tauchkolbens (46) trägt.

3. Servomotor (11) nach einem der vorhergehenden Ansprüche, **dadurch gekennzeichnet, dass**
- das erste Dichtelement (84) des Ausgleichsventils (50) aus einer Dichtung besteht, die von einem Kragen getragen ist, der an dem Ende (102) des vorderen Abschnitts (100) des röhrenförmigen, schwimmenden Elements (76) gebildet ist,
- das zweite Dichtelement (88) des Ausgleichsventils (50) aus einem Teilstück der hinteren Fläche (90) der beweglichen Wand (14) besteht,
- das erste Dichtelement (82) des Einlassventils (52) aus der quer verlaufenden Anschlussfläche (78) zwischen dem vorderen (100) und dem hinteren Abschnitt (108) des röhrenförmigen, schwimmenden Elements (76) besteht,
- das zweite Dichtelement (86) des Einlassventils (52) aus einer Dichtung besteht, die von einem Kragen (87) der Schale (49) getragen ist, welche fest mit dem Tauchkolben (46) verbunden ist.

4. Pneumatischer Servomotor (11) nach dem vorhergehenden Anspruch, **dadurch gekennzeichnet, dass** sich der von der beweglichen Wand (14) getragene, röhrenförmige Bereich (98) zum Führen des Tauchkolbens (46) ausgehend von der hinteren Fläche (90) der beweglichen Wand (14) axial erstreckt und dass die bewegliche Wand (14) mehrere winkelmäßig verteilte Löcher (106) durch die quer verlaufende Wand (14) um den Anschluss zwischen ihrem röhrenförmigen Bereich (98) und ihrer hinteren Fläche (90) aufweist.

5. Servomotor (11) nach einem der vorhergehenden Ansprüche 1 bis 4, **dadurch gekennzeichnet, dass** die erste Feder (40) außerhalb der zweiten Feder (122) angeordnet ist.

6. Servomotor (11) nach dem vorhergehenden Anspruch in Kombination mit Anspruch 2, **dadurch gekennzeichnet, dass** das hintere Ende einer röhrenförmigen Hülse (130) zum Halten der ersten und zweiten Feder (40, 122) an dem Stift (51) anliegt, dass die erste Feder (40) zwischen einer vorderen Absatzfläche (132) der Hülse (130) und der beweglichen Wand (14) zwischengeschaltet ist und dass die zweite Feder (122) zwischen einer vorderen Endfläche (134) der röhrenförmigen Hülse (130) und einer quer verlaufenden Absatzfläche des röhrenförmigen Elements, insbesondere eine hintere Fläche (136) des Kragens (102) am vorderen Ende des vorderen Abschnitts (100), zwischengeschaltet ist.

7. Servomotor (11) nach einem der Ansprüche 2 bis 6, **dadurch gekennzeichnet, dass** der hintere Abschnitt (108) des röhrenförmigen Elements (76) durch eine Lippendichtung (113) in dichter Weise in dem hinteren Abschnitt (109) des Gehäuses (12) angebracht ist.

8. Servomotor (11) nach einem der Ansprüche 2 bis 7, **dadurch gekennzeichnet, dass** der röhrenförmige Bereich (98) der beweglichen Wand (14), welcher den Tauchkolben (46) aufnimmt, mit der beweglichen Wand (14) einstückig ausgebildet ist und dass er eine Bohrung (99) aufweist, in welcher der Tauchkolben (46) aufgenommen ist und die gegenüber der Reaktionsscheibe (32) mündet.

9. Servomotor (11) nach Anspruch 2 bis 8 in Kombination, **dadurch gekennzeichnet, dass** die bewegliche Wand (14), das röhrenförmige, schwimmende Element (76) und die Schale (49), die fest mit dem Tauchkolben (46) verbunden ist, durch Stanz- und Tiefziehverfahren realisiert sind.

## Claims

1. Pneumatic brake booster (11) for a motor vehicle,
of the type comprising a rigid casing (12) inside which there can move a transverse partition (14) sealingly delimiting a front chamber (16), subjected to a first pressure (P₁), and a rear chamber (18) subjected to a second pressure (P₂) that varies between the first pressure (P₁) and a pressure (Pₐ) higher than the first pressure (P₁), which is able to act on an actuating rod (28) of a master cylinder (13) associated with the booster (11) by way of a reaction disk (32) and which is elastically returned toward its rest position by first return means (24),
of the type which comprises a control rod (38) moving in the casing (12) selectively according to an axial input force exerted forward against the action of a return force exerted on the rod (38) via second return means,
of the type in which the movements of the control rod (38) are able to determine the openings and closings of at least one axial intake valve (52) which is inserted between a pressure source subjected to the pressure (Pₐ) higher than the first pressure (P₁) and the rear chamber (18), and of at least one axial equalizing valve (50) which is inserted between the front chamber (16) and the rear chamber (18), to actuate the moving partition (14),
and of the type in which a plunger (46), passing through the moving partition (14) and secured to the end of the control rod (38), is able to act directly upon the actuating rod (28) of the master cylinder (13) by way of the reaction disk (32),
**characterized in that** the booster (11) comprises:
- a floating tubular element (76) made in one piece, inserted more or less radially between the plunger (46) and the casing (12), which is axially mobile and which is elastically returned toward the moving partition (14) via third return means, of which axially offset transverse faces (78, 80) have first sealing elements (82, 84) for the axial intake and equalizing valves (50, 52),
- a complementary transverse second sealing element (86) for the axial intake valve (52), borne by the rear end of the plunger (46),
- a complementary transverse second sealing element (88) for the axial equalizing valve (50), placed on at least one portion of the rear face (90) of the moving partition (14),
and **characterized in that** the rear end (45) of the plunger (46) comprises a rear cup (49) which comprises the complementary transverse second sealing element (86) for the axial intake valve (52) and **in that** the said rear end (45) of the plunger (45) has, passing through it, an independent front pin (51) which has the ends of two concentric springs (40, 122) bearing against it, of which springs a first (40), the other end of which bears against the moving partition (14), forms the second return means associated with the control rod (38), and the second (122), of which the other end bears against a stepped face (136) of the tubular element (76), forms the third return means associated with the said tubular element (76) and allows it to be urged to close the equalizing valve (50).

2. Pneumatic booster (11) according to the preceding claim, **characterized in that** the floating tubular element (76) comprises:
- a front tubular section (100), which is mounted with sealing around a tubular bearing surface (98) of the moving partition (14) which slideably houses the plunger (46), of which the front end (102), bearing the first sealing element (84) for the equalizing valve, facing the second sealing element (88) for the equalizing valve (50) borne by the moving partition (14), is arranged radially externally with respect to at least one communication drilling (106) passing through the partition (14), and of which a rear part communicates with the rear chamber (18),
- a rear tubular section (108), of a diameter smaller than the diameter of the front section (94), which is slideably guided with sealing in a rear tubular section (109) of the casing (12), which forms an intake duct fed by the source of pressure subjected to the pressure (Pₐ) greater than the first pressure (P₁) and of which a front transverse face (78) for connection with the front section bears the first sealing element (82) for the intake valve (52) facing the cup (49) of the plunger (46).

3. Booster (11) according to one of the preceding claims, **characterized in that**:
- the first sealing element (84) for the equalizing valve (50) consists of a seal borne by a flange formed at the end (102) of the front section (100) of the floating tubular element (76),
- the second sealing element (88) for the equalizing valve (50) consists of a portion of the rear face (90) of the moving partition (14),
- the first sealing element (82) for the intake valve (52) consists of the transverse face (78) joining the front (100) and rear (108) portions of the floating tubular element (76),
- the second sealing element (86) for the intake valve (52) consists of a seal borne by a flange (87) of the cup (49) secured to the plunger (46).

4. Pneumatic booster (11) according to the preceding claim, **characterized in that** the tubular bearing surface (98) for guidance of the plunger (46), which surface is borne by the moving partition (14), extends axially from the rear face (90) of the moving partition (14), and **in that** the moving partition (14) comprises a plurality of drillings (106) distributed angularly across the transverse partition (14) about the site where its tubular bearing surface (98) meets its rear face (90).

5. Booster (11) according to any one of Claims 1 to 4,
**characterized in that** the first spring (40) is arranged externally with respect to the second spring (122).

6. Booster (11) according to the preceding claim taken in combination with Claim 2, **characterized in that** the pin (51) has the rear end of a tubular bushing (130) for holding the first and second springs (40, 122) bearing against it, **in that** the first spring (40) is inserted between a front stepped face (132) of the bushing (130) and the moving partition (14), and **in that** the second spring (122) is inserted between a front end face (134) of the tubular bushing (130) and a stepped transverse face of the tubular element, particularly a rear face (136) of the front end flange (102) of the front section (100).

7. Booster (11) according to any one of Claims 2 to 6,
**characterized in that** the rear section (108) of the tubular element (76) is mounted with sealing in the rear section (109) of the casing (12) via a lip seal (113).

8. Booster (11) according to any one of Claims 2 to 7,
**characterized in that** the tubular bearing surface (98) of the moving partition (14) which houses the plunger (46) is formed integrally with the said moving partition (14), and **in that** it has a bore (99) in which the plunger (46) is housed and which opens opposite the reaction disk (32).

9. Booster (11) according to Claims 2 to 8 taken in combination, **characterized in that** the moving partition (14), the floating tubular element (76), the cup (49) secured to the plunger (46) are produced using cutting and pressing methods.
